# FASCICULE DE BREVET EUROPEEN

(11) **EP 2 926 403 B1**
(45) Date de publication et mention de la délivrance du brevet: **18.10.2017**
(21) Numéro de dépôt: 13808109.6
(22) Date de dépôt: 25.11.2013
(51) Int. Cl.: H01M 12/08, H01M 10/44, H01M 10/48

(54) **BATTERIE MÉTAL-AIR AVEC DISPOSITIF DE CONTRÔLE DU POTENTIEL DE L'ÉLECTRODE NÉGATIVE**
METALL-LUFT-BATTERIE MIT EINER VORRICHTUNG ZUM STEUERN DES POTENTIALS DER NEGATIVELEKTRODE DAVON
METAL-AIR BATTERY HAVING A DEVICE FOR CONTROLLING THE POTENTIAL OF THE NEGATIVE ELECTRODE

(30) Priorité: 29.11.2012 FR 1261397
(43) Date de publication de la demande: 07.10.2015
(73) Titulaire: Electricité de France, 75008 Paris (FR)
(72) Inventeur: STEVENS, Philippe, F-77940 Noisy Rudignon (FR); TOUSSAINT, Gwenaëlle, F-77140 Nemours (FR)
(74) Mandataire: Cabinet Plasseraud
(86) Numéro de dépôt international: PCT/FR2013/052845
(87) Numéro de publication internationale: WO 2014/083267

(56) Documents cités:
- WO-A1-2012/156639
- US-A- 5 250 370
- US-A1- 2011 070 506
- US-A1- 2012 249 080

## Description

La présente invention concerne un procédé de stockage et de restitution d'énergie électrique à l'aide d'une batterie de type métal-air, ainsi que la batterie spécialement conçue pour mettre en oeuvre ce procédé.

Les batteries métal-air utilisent une électrode négative à base d'un métal tel que le zinc, le fer ou le lithium, couplée à une électrode à air. L'électrolyte le plus souvent utilisé est un électrolyte aqueux alcalin.

Lors de la décharge d'une telle batterie, de l'oxygène est réduit à l'électrode positive et le métal est oxydé à l'électrode négative :
Décharge à l'électrode négative : M → Mⁿ⁺ + n e⁻
Décharge à l'électrode positive : O₂ + 2H₂O + 4 e⁻ → 4 OH⁻

Lorsqu'une batterie métal-air doit être rechargée électriquement, le sens du courant est inversé. De l'oxygène est produit à l'électrode positive et le métal est redéposé par réduction à l'électrode négative :
Recharge à l'électrode négative : Mⁿ⁺ + n e⁻ → M
Recharge à l'électrode positive : 4 OH⁻ → O₂ + 2H₂O + 4 e⁻

L'avantage des systèmes métal-air réside dans l'utilisation d'une électrode positive de capacité infinie. Les générateurs électrochimiques de type métal-air sont donc connus pour leurs énergies massiques élevées, pouvant atteindre plusieurs centaines de Wh/kg. L'oxygène consommé à l'électrode positive n'a pas besoin d'être stocké dans l'électrode mais peut être prélevé dans l'air ambiant. Les électrodes à air sont également utilisées dans des piles à combustible alcalines qui sont particulièrement avantageuses par rapport à d'autres systèmes en raison des cinétiques réactionnelles élevées au niveau des électrodes et en raison de l'absence de métaux nobles tel que le platine.

Des problèmes lors de la recharge des batteries de type métal-air restent encore à résoudre. En particulier, l'électrode à air qui est l'électrode positive de la batterie lors de la décharge n'est pas conçue pour être utilisée en sens de recharge.
Une électrode à air est une structure solide poreuse en contact avec l'électrolyte liquide. L'interface entre l'électrode à air et l'électrolyte liquide est une interface dite « à triple contact » où sont présents simultanément la matière solide active de l'électrode, l'oxydant gazeux, c'est-à-dire l'air, et l'électrolyte liquide. Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291.

L'électrode à air est habituellement composée de grains de carbone à haute surface tel que le Vulcan® XC72 commercialisé par Cabot. La surface du carbone peut être augmentée par réaction avec un gaz, tel que le CO, préalablement à son intégration dans l'électrode à air. Une électrode poreuse est ensuite fabriquée par agglomération des grains de carbone à l'aide d'un polymère hydrophobe fluoré tel que FEP (fluorinated ethylene propylene) commercialisé par la société Dupont. Le brevet WO 2000/036677 décrit une telle électrode pour batterie métal-air.

Il est préférable d'avoir une surface de réaction sur l'électrode à air la plus élevée possible pour avoir une densité de courant par rapport à la surface géométrique de l'électrode la plus haute possible. Une grande surface de réaction est également utile parce que la densité de l'oxygène gazeux est faible par rapport à un liquide. La grande surface de l'électrode permet de multiplier les sites de réaction. Par contre, cette grande surface de réaction n'est plus nécessaire pour la réaction inverse d'oxydation lors de la recharge puisque la concentration en matière active est beaucoup plus élevée.

L'utilisation d'une électrode à air pendant la charge pour effectuer une réaction d'oxydation et dégagement d'oxygène présente de nombreux inconvénients. La structure poreuse de l'électrode à air est fragile. Il a été observé par les inventeurs que cette structure était détruite mécaniquement par le dégagement de gaz quand elle était utilisée pour produire de l'oxygène par oxydation d'un électrolyte liquide. La pression hydraulique générée au sein de l'électrode par la production de gaz est suffisante pour provoquer une rupture des liaisons entre les grains de carbone constituant l'électrode à air.

Il a également été observé par les inventeurs que le catalyseur ajouté à l'électrode à air pour améliorer le rendement énergétique de la réaction de réduction de l'oxygène tel que l'oxyde de manganèse ou l'oxyde de cobalt n'est pas stable au potentiel nécessaire à la réaction d'oxydation inverse. La corrosion du carbone en présence d'oxygène par oxydation du carbone est également accélérée à des potentiels plus élevés

Certains utilisent un catalyseur de réduction d'oxygène plus résistant couplé à un catalyseur de dégagement d'oxygène dans une électrode bifonctionnelle composée de deux couches couplées électriquement, comme décrit dans le brevet US 5 306 579. Mais cette configuration produit des électrodes ayant néanmoins une durée de vie faible et un nombre de cycles limité.

La dégradation de l'électrode à air, quand elle est utilisée pour recharger la batterie métal-air, réduit fortement la durée de vie de la batterie. Il s'agit d'une des principales causes du faible développement commercial des accumulateurs métal-air rechargeables électriquement.

Face à ces problèmes, un des moyens qui a été retenu pour protéger l'électrode à air contre une dégradation consiste à utiliser une deuxième électrode positive qui est utilisée pour la réaction de dégagement d'oxygène. L'électrode à air est alors découplée de l'électrode de dégagement d'oxygène et seule cette dernière est utilisée pendant la phase de charge. Le brevet US 3 532 548 de Z. Starchurski décrit par exemple une batterie zinc-air avec une deuxième électrode auxiliaire utilisée pour la phase de charge. Durant la phase de charge, l'électrode à air est donc inactive. A la connaissance des inventeurs, il n'a jamais été suggéré que cette électrode à air puisse servir à quelque chose lors de l'étape de charge de la batterie Des batteries similaires sont aussi connues des documents WO 2012/156639 A1, US 5 250 370 A et US 2011/070506 A1 qui traitent des batteries zinc-air ayant une électrode négative, une première électrode positive à air et une deuxième électrode positive pour dégager de l'oxygène. Par ailleurs, comme pour toutes les batteries, il est important de surveiller et de contrôler la tension aux bornes d'une batterie de type métal-air au cours de sa décharge et de sa recharge. La tension aux bornes d'une batterie est généralement mesurée sans difficulté directement entre la borne négative et la borne positive de la batterie. La tension aux bornes de la batterie représente la différence des potentiels de l'électrode positive et de l'électrode négative.

Dans le cas de batteries classiques, le contrôle de la tension peut être réalisé par des systèmes électroniques de contrôle ou BMS (d'après l'expression anglo-saxonne « Battery Management System »). Ces dispositifs sont bien connus de l'homme du métier. Le but d'un BMS est de surveiller l'état des différents éléments de la batterie, mais aussi de la protéger des dégradations qui pourraient être causées par une mauvaise utilisation, par exemple des sur-tensions ou des sous-tensions. Le BMS a donc aussi pour fonction d'augmenter la durée de vie de la batterie.

Il a été constaté par les inventeurs que le seul contrôle de la tension aux bornes des batteries de type métal-air pouvait être insuffisant pour protéger de façon optimale la batterie de certains types de dégradations intervenant du côté de l'électrode négative lors de la recharge électrique d'une batterie métal-air.

Par exemple, dans une batterie zinc-air, lors de la recharge, les ions métalliques Zn²⁺ sont réduits à l'électrode négative et se déposent sous leur forme métallique Zn dès que le potentiel au niveau de cette électrode est suffisamment négatif. Un dépôt uniforme et homogène du métal sur l'électrode est souhaité pour assurer une bonne tenue durant les cycles de charges et de décharges de cette batterie.

Or, il a été constaté que, dans certaines conditions, le métal se déposait sous forme de mousse peu adhérente à la surface de l'électrode, mousse qui pouvait ensuite se détacher de l'électrode provoquant une perte de matière active et par conséquent une perte de capacité massique de la batterie. Dans d'autres cas, il a été constaté que le métal pouvait également se déposer sous forme de dendrites. Ces dendrites peuvent croître jusqu'à atteindre l'électrode positive pendant la charge, provoquant un court-circuit interne empêchant la recharge.

Il a été observé par les inventeurs qu'un contrôle du potentiel de l'électrode négative pendant la charge pour éviter qu'il ne soit trop élevé permet de limiter la formation de dépôt de zinc sous forme de mousse ou de dendrites.

Toutefois, dans le cas des batteries métal-air, il est connu que, pendant la charge, le potentiel de l'électrode positive augmente beaucoup plus rapidement que le potentiel de l'électrode négative. De ce fait, le contrôle sur la tension aux bornes de la batterie n'est pas assez précis pour assurer le contrôle du potentiel de l'électrode négative.

Il existe donc actuellement un besoin de disposer d'un moyen précis de mesure et de contrôle du potentiel de l'électrode négative d'une batterie de type métal-air lors de sa charge.

Un des objectifs de la présente invention est donc de concevoir un procédé de charge et de décharge d'une batterie de type métal-air durant lequel est assuré un contrôle précis du potentiel de l'électrode négative. On souhaite également disposer d'une batterie ayant un moyen capable de remplir cette fonction. Toutefois, il serait avantageux de ne pas alourdir la batterie, car cela aurait pour effet de diminuer sa capacité massique.

Suite à ces constatations, les inventeurs ont eu l'idée de mettre à profit, lors de la phase de décharge, la présence de l'électrode à air qui est alors inactive.

La présente invention a pour objet un procédé de stockage et de restitution d'énergie électrique utilisant une batterie métal-air comprenant :
- une borne négative,
- une borne positive,
- une électrode négative, connectée à la borne négative,
- une première électrode positive à air, et
- une seconde électrode positive de dégagement d'oxygène,
comprenant les étapes suivantes :
(a) une phase de décharge au cours de laquelle la première électrode positive à air est connectée à la borne positive de la batterie et la seconde électrode positive à dégagement d'oxygène est déconnectée de la borne positive de la batterie ;
(b) une phase de recharge au cours de laquelle la seconde électrode positive de dégagement d'oxygène est connectée à la borne positive de la batterie et la première électrode positive à air est déconnectée de la borne positive de la batterie, et au cours de laquelle le potentiel de l'électrode négative est mesuré par rapport à la première électrode positive à air.

En outre, l'invention a également pour objet le dispositif spécialement conçu pour la mise en oeuvre de ce procédé, c'est-à-dire une batterie métal-air comprenant :
- une borne négative,
- une borne positive,
- une électrode négative, connectée à la borne négative,
- une première électrode positive à air,
- une seconde électrode positive de dégagement d'oxygène,
- un moyen de commutation permettant de connecter à la borne positive soit la première électrode positive à air, soit la seconde électrode positive de dégagement d'oxygène, et
- un moyen de mesure du potentiel de l'électrode négative, adapté pour mesurer le potentiel de l'électrode négative lors de la recharge de la batterie par rapport à la première électrode positive à air.

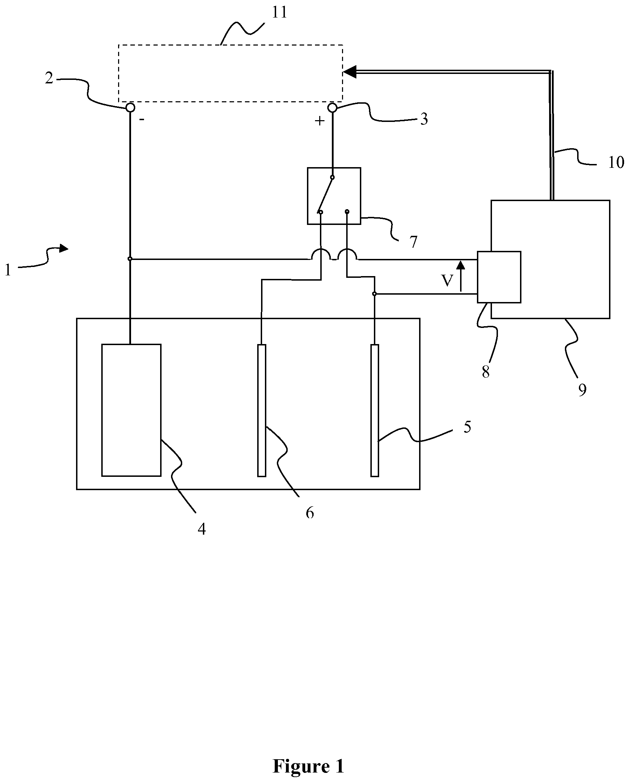

La **Figure 1** annexée à la présente demande est une représentation schématique d'un mode de réalisation d'une batterie objet de la présente invention, dans une configuration de recharge.

Dans la présente demande, les termes « charge » et « recharge » sont employés comme synonymes, et sont interchangeables.

Le procédé de stockage et de restitution d'énergie électrique selon l'invention est mis en oeuvre avec une batterie de type métal-air. Cette batterie métal-air comprend, de façon classique, une borne négative et une borne positive. Ces deux bornes permettent de connecter la batterie pour former un circuit de puissance : soit un circuit de charge dans lequel la batterie est reliée à un moyen de charge qui fournit de l'énergie à la batterie, soit un circuit de décharge dans lequel la batterie est connectée à un dispositif quelconque auquel elle fournit de l'énergie.

Les bornes de la batterie sont reliées, dans la batterie, à des électrodes.

La batterie métal air selon l'invention comprend au moins trois électrodes :
- une électrode négative,
- une première électrode positive à air, et
- une seconde électrode positive de dégagement d'oxygène.

L'électrode négative est connectée en permanence, c'est à dire pendant la charge et pendant la décharge, à la borne négative de la batterie. L'électrode négative peut être en principe n'importe quelle électrode métallique utilisée couramment dans une cellule métal-air. Il peut s'agir par exemple d'une électrode de fer, de lithium ou de zinc, de préférence une électrode de lithium (Li/Li⁺) ou une électrode de zinc (Zn/Zn²⁺).

La première électrode positive de la batterie selon l'invention est une électrode à air. Ce type d'électrode a été décrit de manière générale ci-avant. N'importe quel type d'électrode à air peut être utilisé dans la batterie selon la présente invention. En particulier, la première électrode positive à air de la batterie peut être une électrode obtenue par agglomération d'une poudre de carbone constituée de grains de carbone à haute surface spécifique, telle que décrite dans la demande de brevet WO 2000/036677. L'électrode à air, à base de particules de carbone, peut contenir en outre au moins un catalyseur de réduction d'oxygène. Ce catalyseur de réduction d'oxygène est de préférence choisi dans le groupe constitué par l'oxyde de manganèse et l'oxyde de cobalt.

La seconde électrode positive de la batterie selon l'invention est une électrode de dégagement d'oxygène. N'importe quel type d'électrode remplissant cette fonction connue par l'homme du métier peut être utilisé dans la batterie selon la présente invention. La seconde électrode positive de dégagement d'oxygène peut par exemple être une électrode métallique stable dans l'électrolyte de la batterie, tel qu'une électrode en argent, en nickel ou en acier inoxydable.

Le procédé de stockage et de restitution d'énergie électrique selon l'invention comprend au moins une phase de décharge et une phase de recharge.

Lors de la phase (a) de décharge, la première électrode positive à air est connectée à la borne positive de la batterie et la seconde électrode positive à dégagement d'oxygène est déconnectée de la borne positive de la batterie. La première électrode positive à air est destinée à être utilisée comme électrode de travail lors de la décharge de la batterie, c'est-à-dire comme électrode positive active sur laquelle a lieu la réaction électrochimique intervenant lors de la décharge de la batterie.

Lors de la phase (b) de recharge, la seconde électrode positive de dégagement d'oxygène est connectée à la borne positive de la batterie et la première électrode positive à air est déconnectée de la borne positive de la batterie. La seconde électrode positive de dégagement d'oxygène est destinée à être utilisée comme électrode de travail lors de la recharge de la batterie, c'est-à-dire comme électrode positive active sur laquelle a lieu la réaction électrochimique intervenant lors de la recharge de la batterie.

C'est pourquoi la batterie spécialement conçue pour la mise en oeuvre de ce procédé comprend également un moyen de commutation permettant de connecter à la borne positive soit la première électrode positive à air, soit la seconde électrode positive de dégagement d'oxygène.

Selon un mode de réalisation, la commutation de la connexion de la borne positive entre la première et la seconde électrode positive peut être actionnée manuellement. Cependant, avantageusement, le moyen de commutation peut être relié à un moyen de commande de la commutation. Ce moyen peut être électronique, et il peut avantageusement être un élément d'un système électronique de contrôle ou BMS. Le moyen de commande de la commutation peut actionner le moyen de commutation de façon à ce que ce soit la première électrode positive à air qui soit reliée à la borne positive de la batterie lorsque celle-ci est en décharge, et la seconde électrode positive de dégagement d'oxygène qui soit reliée à la borne positive de la batterie lorsque celle-ci est en recharge.

Le moyen de commande de la commutation peut être adapté pour mesurer la tension entre les bornes positives et négatives de la batterie. Ceci revient à mesurer la différence de potentiel entre les deux électrodes de travail, à savoir entre l'électrode négative et la première électrode positive à air lors de la décharge, et entre l'électrode négative et la seconde électrode positive à dégagement d'oxygène lors de la recharge.

Toutefois, cette mesure de la tension aux bornes de la batterie ne permet pas d'assurer un contrôle précis du potentiel de l'électrode négative lors de la charge car le potentiel de l'électrode positive varie alors plus rapidement que le potentiel de l'électrode négative. La différence de potentiel mesurée entre la borne positive et la borne négative de la batterie ne reflète donc pas instantanément précisément le potentiel de la borne négative.

Pour que la mesure du potentiel de l'électrode négative ne dépende pas du potentiel de la seconde électrode positive de dégagement d'oxygène, les inventeurs proposent qu'une mesure soit faite entre l'électrode négative et une électrode de référence. Une électrode de référence est une électrode dont le potentiel est fixe durant la mesure. Une électrode de travail, c'est-à-dire une électrode active lors de la réaction électrochimique, ne peut pas être une électrode de référence car son potentiel varie en raison du passage du courant.

C'est pourquoi la phase (b) de recharge du procédé selon la présente invention comprend avantageusement une étape consistant à mesurer le potentiel de l'électrode négative par rapport à la première électrode positive à air. Lors de la recharge de la batterie, la première électrode à air est déconnectée de la borne positive de la batterie. Elle n'est plus l'électrode de travail, et aucun courant ne circule à travers elle. Elle peut donc avantageusement être utilisée comme électrode de référence pour la mesure du potentiel de l'électrode négative lors de la recharge de la batterie.

La batterie selon l'invention, spécialement conçue pour la mise en oeuvre de ce procédé, comprend avantageusement un moyen de mesure du potentiel de l'électrode négative, ladite mesure étant faite par rapport à la première électrode positive à air.

L'utilisation de l'électrode positive à air en tant qu'électrode de référence pour la mesure du potentiel de l'électrode négative lors de la phase de décharge de la batterie est particulièrement avantageuse car il n'est pas nécessaire d'ajouter une électrode au dispositif qui serait uniquement dédiée à cette fonction. La présente invention présente donc l'avantage d'être simple et peu coûteuse car elle ne nécessite pas de modifications structurelles critiques sur les batteries déjà existantes pour être mise en oeuvre. En outre, les batteries métal-air spécialement conçues pour la mise en oeuvre du procédé selon l'invention ne comprenant pas d'électrode supplémentaire, leur poids et leur encombrement ne sont pas affectés.

Avoir une mesure précise de la valeur du potentiel de l'électrode négative est intéressant pour un homme du métier car elle permet une meilleure gestion de la batterie. Par exemple, contrôler le potentiel de l'électrode négative pendant la charge dans les batteries de type zinc-air pour éviter qu'il ne soit trop élevé permet de limiter la formation de dépôt de zinc sous forme de mousse ou de dendrites.

Dans un mode de réalisation avantageux, la valeur absolue du potentiel de l'électrode négative peut être contrôlée lors de la phase de recharge de la batterie, de façon à ce qu'elle ne soit pas supérieure à une valeur de consigne. Le contrôle de la valeur du potentiel de l'électrode négative lors de la recharge peut de préférence être fait automatiquement par un moyen de commande électronique de la charge. Le moyen de commande électronique peut être un élément d'un système électronique de contrôle ou BMS. Le moyen de commande de la charge peut être adapté pour comparer en continu, lors de la recharge, la valeur du potentiel de l'électrode négative mesurée selon l'invention à une valeur de consigne, et pour envoyer un signal de régulation à des moyens de charge de la batterie de façon à ce que la valeur absolue du potentiel mesuré reste inférieure à la valeur de consigne.

Dans un autre mode de réalisation avantageux, la valeur absolue du potentiel de l'électrode négative mesuré par rapport à la première électrode positive à air peut également être contrôlée lors de la phase de décharge de la batterie, de façon à ce qu'elle ne soit pas inférieure à une seconde valeur de consigne. Lors de la phase de décharge, la première électrode positive à air est connectée à la borne positive de la batterie. La mesure du potentiel de l'électrode négative par rapport à cette première électrode positive à air est donc équivalente à une mesure de la tension entre les bornes positives et négatives de la batterie. De préférence, la phase (a) de décharge de la batterie est donc arrêtée avant que la valeur absolue de la tension mesurée soit inférieure à la seconde valeur de consigne fixée. Le contrôle de la valeur du potentiel de l'électrode négative lors de la recharge peut être fait automatiquement par un moyen de commande électronique de la décharge. Ce moyen peut être combiné au moyen de commande électronique de charge, et il peut être un élément d'un système électronique de contrôle ou BMS. Le moyen de commande de la décharge peut être adapté pour comparer en continu, lors de la décharge, la valeur du potentiel de l'électrode négative mesurée selon l'invention à la seconde valeur de consigne, et pour provoquer l'arrêt de la décharge de la batterie si la valeur absolue du potentiel mesuré devient inférieure à la valeur de consigne.

Pour pouvoir mettre en oeuvre ces modes de réalisations préférés, la batterie métal-air selon l'invention peut comprendre un moyen de commande de charge adapté pour maintenir la valeur absolue de la tension mesurée entre l'électrode négative et la première électrode positive à air inférieure à une valeur de consigne, lors de la charge de la batterie. Alternativement, ou en plus, la batterie métal-air selon l'invention peut comprendre un moyen de commande de décharge adapté pour maintenir la valeur absolue de la tension mesurée entre l'électrode négative et la première électrode positive à air supérieure à une seconde valeur de consigne, lors de la décharge de la batterie. Les moyens de commandes de charge et de décharge peuvent éventuellement être un seul et même moyen, remplissant ces deux fonctions.

Une batterie selon l'invention peut comprendre en outre un système électronique de contrôle de la batterie, également nommé un BMS. Les moyens de commande de charge et/ou de décharge peuvent faire partie dudit système électronique de contrôle.

L'invention sera à présent décrite plus en détail en référence à la **figure 1** annexée représentant schématiquement d'un mode de réalisation d'une batterie objet de la présente invention, dans une configuration de recharge.

La batterie **1** comprend une borne négative **2,** une borne positive **3,** une électrode négative **4,** connectée à la borne négative **2,** une première électrode positive à air **5** et une seconde électrode positive à dégagement d'oxygène **6.** Dans la configuration représentée sur la **figure 1****,** qui est une configuration que peut prendre la batterie lors d'une phase de charge, c'est la seconde électrode positive à dégagement d'oxygène **6** qui est connectée à la borne positive **3** de la pile. Toutefois, la batterie **1** comprend également un moyen de commutation **7** qui permet de déconnecter la seconde électrode positive de dégagement d'oxygène **6** de la borne positive **3** pour y connecter la première électrode positive à air **5** lors des phases de décharge. La batterie **1** étant représentée en phase de charge, un moyen de charge **11** a été représenté sur la **figure 1****,** connecté aux bornes négatives **2** et positives **3** de la batterie. Il ne fait toutefois pas partie de la batterie **1.**

La batterie **1** comprend en outre un moyen de mesure du potentiel de l'électrode négative **8.** La mesure de ce potentiel est effectuée en mesurant la tension **V** entre l'électrode négative **4** et la première électrode positive à air **5.** Lors de la phase de recharge de la batterie représentée, la première électrode positive à air **5** joue le rôle d'une électrode de référence car elle n'est pas connectée à la borne positive **3** de la batterie.

La batterie **1** comprend en outre un moyen de commande de charge **9.** Ce moyen de commande de charge **9** compare en continu, lors de la recharge, la valeur **V** mesurée par le moyen de mesure **8** à une valeur de consigne **Vc,** et le moyen de commande de charge **9** envoie un signal de régulation **10** aux moyens de charge **11** de la batterie de façon à ce que la valeur absolue du potentiel mesuré reste inférieure à la valeur de consigne.

## Revendications

1. Procédé de stockage et de restitution d'énergie électrique utilisant une batterie métal-air comprenant :
- une borne négative (2),
- une borne positive (3),
- une électrode négative (4), connectée à la borne négative,
- une première électrode positive à air (5), et
- une seconde électrode positive de dégagement d'oxygène (6),
comprenant les étapes suivantes :
(a) une phase de décharge au cours de laquelle la première électrode positive à air (5) est connectée à la borne positive (3) de la batterie et la seconde électrode positive à dégagement d'oxygène (6) est déconnectée de la borne positive (3) de la batterie ;
(b) une phase de recharge au cours de laquelle la seconde électrode positive de dégagement d'oxygène (6) est connectée à la borne positive (3) de la batterie et la première électrode positive à air (5) est déconnectée de la borne positive (3) de la batterie, et au cours de laquelle le potentiel de l'électrode négative (4) est mesuré par rapport à la première électrode positive à air (5).

2. Procédé selon la revendication 1, **caractérisé par le fait que** la valeur absolue du potentiel de l'électrode négative (4) est contrôlée lors de la phase de recharge de la batterie, de façon à ce qu'elle ne soit pas supérieure à une valeur de consigne.

3. Procédé selon la revendication 2, **caractérisé par le fait que** le contrôle de la valeur du potentiel de l'électrode négative (4) lors de la recharge est fait automatiquement par un moyen de commande électronique (9) de la charge.

4. Procédé selon l'une quelconque des revendications 1 à 3, **caractérisé par le fait que**, au cours de la phase de décharge, la valeur absolue du potentiel de l'électrode négative (4) mesuré par rapport à la première électrode positive à air (5) connectée à la borne positive (3) de la batterie est contrôlée de façon à ce qu'elle ne soit pas inférieure à une valeur de consigne.

5. Procédé selon la revendication 4, **caractérisé par le fait que** le contrôle de la valeur du potentiel de l'électrode négative (4) lors de la décharge est fait automatiquement par un moyen de commande électronique de la décharge.

6. Batterie métal-air (1) comprenant :
- une borne négative (2),
- une borne positive (3),
- une électrode négative (4), connectée à la borne négative (2),
- une première électrode positive à air (5),
- une seconde électrode positive de dégagement d'oxygène (6),
- un moyen de commutation (7) permettant de connecter à la borne positive (3) soit la première électrode positive à air (5), soit la seconde électrode positive de dégagement d'oxygène (6), et
- un moyen de mesure du potentiel (8) de l'électrode négative (4) adapté pour mesurer le potentiel de l'électrode négative lors de la recharge de la batterie par rapport à la première électrode positive à air (5).

7. Batterie selon la revendication 6, **caractérisée en ce qu'**elle comprend en outre un moyen de commande de charge (9) adapté pour maintenir la valeur absolue de la tension mesurée entre l'électrode négative (4) et la première électrode positive à air (5) inférieure à une valeur de consigne, lors de la charge de la batterie.

8. Batterie selon l'une ou l'autre des revendications 6 ou 7, **caractérisée en ce qu'**elle comprend en outre un moyen de commande de décharge adapté pour maintenir la valeur absolue de la tension mesurée entre l'électrode négative (4) et la première électrode positive à air (5) supérieure à une seconde valeur de consigne, lors de la décharge de la batterie.

9. Batterie selon l'une ou l'autre des revendications 7 ou 8, **caractérisée en ce que** la batterie comprend en outre un système électronique de contrôle de la batterie, et lesdits moyen de commande de charge et/ou de décharge font partie du système électronique de contrôle.

## Patentansprüche

1. Verfahren zum Speichern und Wiederherstellen von elektrischer Energie unter Verwendung einer Metall-Luft-Batterie, umfassend:
- einen negativen Anschluss (2),
- einen positiven Anschluss (3),
- eine negative Elektrode (4), die mit dem negativen Anschluss verbunden ist,
- eine erste positive Luftelektrode (5), und
- eine zweite positive Sauerstofffreisetzungselektrode (6);
umfassend die folgenden Schritte:
(a) eine Phase der Entladung, während welcher die erste positive Luftelektrode (5) mit dem positiven Anschluss (3) der Batterie verbunden ist und die zweite positive Sauerstofffreisetzungselektrode (6) von dem positiven Anschluss (3) der Batterie getrennt ist;
(b) eine Wiederaufladephase, während welcher die zweite positive Sauerstofffreisetzungselektrode (6) mit dem positiven Anschluss (3) der Batterie verbunden ist und die erste positive Luftelektrode (5) von dem positiven Anschluss (3) der Batterie getrennt ist, und während welcher das Potential der negativen Elektrode (4) im Verhältnis zur ersten positiven Luftelektrode (5) gemessen wird.

2. Verfahren nach Anspruch 1,
**dadurch gekennzeichnet, dass** der Absolutwert des Potentials der negativen Elektrode (4) in der Wiederaufladephase der Batterie derart gesteuert wird, dass dieser nicht größer ist als ein Vorgabewert.

3. Verfahren nach Anspruch 2,
**dadurch gekennzeichnet, dass** die Steuerung des Werts des Potentials der negativen Elektrode (4) beim Wiederaufladen automatisch durch ein elektronisches Steuermittel (9) der Ladung vorgenommen wird.

4. Verfahren nach einem der Ansprüche 1 bis 3,
**dadurch gekennzeichnet, dass**, während der Entladephase, der Absolutwert des Potentials der negativen Elektrode (4), gemessen im Verhältnis zur ersten positiven Luftelektrode (5), die mit dem positiven Anschluss (3) der Batterie verbunden ist, derart gesteuert wird, dass dieser nicht kleiner ist als ein Vorgabewert.

5. Verfahren nach Anspruch 4,
**dadurch gekennzeichnet, dass** die Steuerung des Werts des Potentials der negativen Elektrode (4) bei der Entladung automatisch durch ein elektronisches Steuermittel der Entladung vorgenommen wird.

6. Metall-Luft-Batterie (1), umfassend:
- einen negativen Anschluss (2),
- einen positiven Anschluss (3),
- eine negative Elektrode (4), die mit dem negativen Anschluss (2) verbunden ist,
- eine erste positive Luftelektrode (5),
- eine zweite positive Sauerstofffreisetzungselektrode (6),
- ein Schaltmittel (7), das es gestattet, den positiven Anschluss (3) entweder mit der ersten positiven Luftelektrode (5) oder mit der zweiten positiven Sauerstofffreisetzungselektrode (6) zu verbinden, und
- ein Mittel zum Messen des Potentials (8) der negativen Elektrode (4), das geeignet ist, das Potential der negativen Elektrode beim Wiederaufladen der Batterie im Verhältnis zur ersten positiven Luftelektrode (5) zu messen.

7. Batterie nach Anspruch 6,
**dadurch gekennzeichnet, dass** diese außerdem ein Ladungssteuermittel (9) umfasst, das geeignet ist, den Absolutwert der Spannung, die zwischen der negativen Elektrode (4) und der ersten positiven Luftelektrode (5) gemessen wird, beim Laden der Batterie unter einem Vorgabewert zu halten.

8. Batterie nach einem der Ansprüche 6 oder 7,
**dadurch gekennzeichnet, dass** diese außerdem ein Entladungssteuermittel umfasst, das geeignet ist, den Absolutwert der Spannung, die zwischen der negativen Elektrode (4) und der ersten positiven Luftelektrode (5) gemessen wird, beim Entladen der Batterie über einem zweiten Vorgabewert zu halten.

9. Batterie nach einem der Ansprüche 7 oder 8,
**dadurch gekennzeichnet, dass** die Batterie außerdem ein elektronisches System zur Steuerung der Batterie umfasst, und das Ladungs- und/oder Entladungssteuermittel einen Teil des elektronischen Steuersystems bilden.

## Claims

1. Method for storing and releasing electrical energy using a metal-air battery comprising:
- a negative terminal (2),
- a positive terminal (3),
- a negative electrode (4), connected to the negative terminal,
- a first positive air electrode (5), and
- a second positive oxygen evolution electrode (6),
comprising the following steps:
(a) a discharging phase during which the first positive air electrode (5) is connected to the positive terminal (3) of the battery and the second positive oxygen evolution electrode (6) is disconnected from the positive terminal (3) of the battery;
(b) a recharging phase during which the second positive oxygen evolution electrode (6) is connected to the positive terminal (3) of the battery and the first positive air electrode (5) is disconnected from the positive terminal (3) of the battery, and during which the potential of the negative electrode (4) is measured relative to the first positive air electrode (5).

2. Method according to claim 1, **characterized in that** the absolute value of the potential of the negative electrode (4) is controlled during the recharging phase of the battery, so that it is not above a set value.

3. Method according to claim 2, **characterized in that** the value of the potential of the negative electrode (4) during recharging is controlled automatically by an electronic charge control means (9).

4. Method according to any one of claims 1 to 3, **characterized in that**, during the discharging phase, the absolute value of the potential of the negative electrode (4) measured relative to the first positive air electrode (5) connected to the positive terminal (3) of the battery is controlled so that it is not below a set value.

5. Method according to claim 4, **characterized in that** the value of the potential of the negative electrode (4) during discharging is controlled automatically by an electronic discharge control means.

6. Metal-air battery (1) comprising:
- a negative terminal (2),
- a positive terminal (3),
- a negative electrode (4), connected to the negative terminal (2),
- a first positive air electrode (5),
- a second positive oxygen evolution electrode (6),
- a switching means (7) allowing either the first positive air electrode (5) or the second positive oxygen evolution electrode (6) to be connected to the positive terminal (3), and
- a means for measuring the potential (8) of the negative electrode (4), adapted for measuring the potential of the negative electrode during recharging of the battery, said measurement being performed relative to the first positive air electrode (5).

7. Battery according to claim 6, **characterized in that** it further comprises a charge control means (9) adapted for keeping the absolute value of the voltage measured between the negative electrode (4) and the first positive air electrode (5) below a set value, during charging of the battery.

8. Battery according to either of claims 6 or 7, **characterized in that** it further comprises a discharge control means adapted for keeping the absolute value of the voltage measured between the negative electrode (4) and the first positive air electrode (5) above a second set value, during discharging of the battery.

9. Battery according to either of claims 7 or 8, **characterized in that** the battery further comprises an electronic battery control system, and said charge control means and/or discharge control means form part of the electronic control system.
